# EUROPÄISCHE PATENTSCHRIFT

(11) **EP 2 684 987 B1**
(45) Veröffentlichungstag und Bekanntmachung des Hinweises auf die Patenterteilung: **14.01.2015**
(21) Anmeldenummer: 12176197.7
(22) Anmeldetag: 12.07.2012
(51) Int. Cl.: C25D 17/08, C23C 18/16, B05C 3/10, B05C 13/02, B65G 49/04, C25D 17/06, C25F 7/00

(54) **Tauchbad mit einem Halter und einer Hubvorrichtung**
Immersion bath with a supporting rack and lifting device
Bain d'immersion avec une grille de support et un mécanisme élévateur

(43) Veröffentlichungstag der Anmeldung: 15.01.2014
(73) Patentinhaber: Thomas GmbH, 63505 Langenselbold (DE)
(72) Erfinder: Balaguè, Josep Valls, Barcelona (ES)
(74) Vertreter: Lorenz, Bernd Ingo Thaddeus

(56) Entgegenhaltungen:
- DE-U1- 29 814 487
- FR-A1- 2 823 769
- GB-A- 1 428 856
- JP-A- 1 294 898
- US-A- 2 654 707

## Beschreibung

Die Erfindung betrifft ein Tauchbad mit einem Behälter für eine Prozessflüssigkeit, einem Halter zur Aufnahme eines mit Werkstücken bestückten Werkstückträgers und einer Hubvorrichtung zum Absenken des Halters aus einer ersten Position oberhalb des Flüssigkeitsspiegels der Prozessflüssigkeit in eine zweite Position innerhalb der Prozessflüssigkeit. Es versteht sich, dass der Halter mittels der Hubvorrichtung auch wieder aus der Prozessflüssigkeit entnommen werden kann.

Es wird vorausgesetzt, dass auf dem Werkstückträger eine Vielzahl von Werkstücken klemmend fixiert sind. Bei den Werkstücken handelt es sich insbesondere um kleinteilige Hohlkörper, z. B. Hülsen und Kappen, die mit einer hochwertig veredelten Oberfläche versehen werden sollen. Es werden Werkstückträger verwendet, die einen Grundrahmen und an dem Grundrahmen befestigte Leisten mit jeweils einer Mehrzahl von paarweise angeordneten elastisch verformbaren Fingern zur Fixierung der Hohlkörper aufweisen. Der Behälter kann als Prozessflüssigkeit beispielsweise ein Farbbad, ein Eloxalbad, ein Galvanikbad, oder dergleichen enthalten. Variationen bezüglich der Tauchzeit wirken sich signifikant auf den Farbeffekt und Glanzeffekt der Werkstücke aus.

Aus der Praxis ist es bekannt, Werkstückträger, die zuvor mit den zu behandelnden Werkstücken bestückt worden sind, an einer Fördereinrichtung aufzuhängen, mit vertikaler Ausrichtung zu transportieren und vertikal in die Prozessflüssigkeit einzutauchen. Die am unteren Ende des Werkstückträgers angeordneten Werkstücke sind bei einem solchen Verfahren länger der Prozessflüssigkeit ausgesetzt als die am oberen Ende des Werkstückträgers fixierten Werkstücke. Die unterschiedliche Verweildauer zum Beispiel in einem Eloxalbad und/oder in einem nachgeschalteten Farbbad wirkt sich auf die Qualität der Werkstückoberfläche nachteilig aus. Die eloxierten und/oder gefärbten Flächen der an einem Werkstückträger fixierten Werkstücke weisen beispielsweise Unterschiede hinsichtlich der Farbintensität auf, die auf eine unterschiedliche Verweildauer der Werkstücke im Farbbad zurückzuführen ist. Hinzu kommt das Problem, dass die Prozessflüssigkeit von den an einem vertikal ausgerichteten Werkstückträger fixierten Werkstücken nicht vollständig abläuft bzw. abtropft, wenn der Werkstückträger aus dem Bad herausgezogen wird. Es resultieren beachtliche Verschleppungsverluste der Prozessflüssigkeit, wenn der Werkstückträger mit den daran fixierten Werkstücken aus der Prozessflüssigkeit herausgezogen und einem nachgeschalteten Behandlungsbad zugeführt wird.

Ein Tauchbad mit den eingangs beschriebenen Merkmalen ist aus GB 1 428 856 A bekannt. An die Werkstückhalterung ist eine Wende- und Verschiebemechanik angeschlossen, durch deren Betätigung die Ausrichtung der Werkstücke innerhalb der Prozessflüssigkeit verändert werden kann.

Aus JP 1 294 898 A ist ebenfalls ein Tauchbad mit den eingangs beschriebenen Merkmalen bekannt. An den Halter zur Aufnahme eines mit Werkstücken bestückten Werkstückträgers ist eine Wendevorrichtung angeschlossen, durch deren Betätigung der Halter um eine horizontale Achse gedreht werden kann.

Vor diesem Hintergrund liegt der Erfindung die Aufgabe zugrunde, ein Tauchbad anzugeben, bei dem für alle an einem Werkstückträger fixierten Werkstücke dieselbe Tauchzeit gewährleistet werden kann. Bei einer Entnahme des Werkstückträgers soll die Prozessflüssigkeit ferner möglichst vollständig von den Werkstücken und dem Werkstückträger abtropfen.

Gegenstand der Erfindung und Lösung dieser Aufgabe ist ein Tauchbad nach Anspruch 1.

Vorausgesetzt wird ein Tauchbad mit einem Behälter für eine Prozessflüssigkeit, einem Halter zur Aufnahme eines mit Werkstücken bestückten Werkstückträgers sowie eine Hubvorrichtung zum Absenken des Halters aus einer ersten Position oberhalb der Flüssigkeitsspiegels der Prozessflüssigkeit in eine zweite Position innerhalb der Prozessflüssigkeit. Es versteht sich, dass die Hubvorrichtung auch zur Entnahme des Halters aus der Prozessflüssigkeit genutzt werden kann und der Halter durch eine Rückstellbewegung in die Ausgangsposition oberhalb des Flüssigkeitsspiegels gelangt. Erfindungsgemäß ist der Halter an eine Wende- und Verschiebemechanik angeschlossen, welche den Halter bei einer durch einen Stellhub der Vorrichtung bewirkten Bewegung, die sich von der ersten Position bis zur zweiten Position erstreckt, oberhalb des Flüssigkeitsspiegels dreht und danach mit einer translatorischen Bewegung in die Prozessflüssigkeit absenkt.

Der Halter weist eine Auflagefläche für mindestens einen Werkstückträger auf, der in der ersten Position vorzugsweise horizontal ausgerichtet ist. Auf dem horizontal ausgerichteten Träger sind die Werkstücke so fixiert, dass sich alle Werkstücke in derselben Ebene befinden. Eine Stellbewegung der Hubvorrichtung aus der ersten Position heraus löst eine Rotation des Halters aus. Durch die Rotation des Halters wird der an dem Halter befestigte Werkstückträger gewendet und nach dem Wenden aus einer Position oberhalb des Flüssigkeitsspiegels mit einer fortgesetzten vertikalen Bewegung des Halters in die Badflüssigkeit abgesenkt. Der Werkstückträger führt sowohl eine translatorische Bewegung als auch eine Drehbewegung aus. Die erfindungsgemäße Ausgestaltung des Tauchbades hat den Vorteil, dass alle an dem Werkstückträger fixierten Werkstücke zeitgleich den Flüssigkeitsspiegel der Prozessflüssigkeit erreichen und in die Prozessflüssigkeit des Behandlungsbades eintauchen. Die erfindungsgemäße Vorrichtung eignet sich daher insbesondere für Tauchverfahren, bei denen die Verweildauer der Werkstücke innerhalb der Prozessflüssigkeit sehr exakt eingestellt werden muss und es notwendig ist, dass alle an dem Werkstückträger fixierten Werkstücke die gleiche Verweildauer im Bad haben. Entsprechend vorteilhaft ist auch die Entnahme des Werkstückträgers durch eine Rückstellbewegung der Hubvorrichtung aus der zweiten Position innerhalb der Prozessflüssigkeit in die Ausgangsposition oberhalb des Flüssigkeitsspiegels. Bei der Rückstellbewegung verlassen alle an dem Werkstückträger fixierten Werkstücke zeitgleich die Prozessflüssigkeit. Nach dem Verlassen der Prozessflüssigkeit wird der Halter in einer Rotationsbewegung um 180° zurückgedreht und dadurch der an dem Halter fixierte Werkstückträger gewendet, so dass die Werkstücke über Kopf ausgerichtet sind. In Überkopfstellung kann die Prozessflüssigkeit vollständig, auch aus dem Innenraum der Werkstücke, abtropfen. Schleppverluste können dadurch minimiert werden. Die erfindungsgemäße Ausgestaltung hat auch den Vorteil, dass die Kinematik von einer translatorischen Bewegung der Hubvorrichtung abgeleitet ist. Für die Drehbewegung wird kein separater Antrieb benötigt. Die Hubvorrichtung ist außerhalb des die Prozessflüssigkeit enthaltenden Behälters angeordnet und daher der Prozessflüssigkeit nicht ausgesetzt. Lediglich die aus einfachen mechanischen Elementen gebildete Wende- und Verschiebemechanik taucht in die Prozessflüssigkeit ein.

Der Halter weist zweckmäßig an zwei gegenüberliegenden Seiten jeweils eine C-förmige Schiene zur Auflage mindestens eines Werkstückträgers auf. Die C-förmigen Schienen sind vorzugsweise aus Drahtelementen gefertigt, so dass sie von der Prozessflüssigkeit umspült werden können und sich keine Flüssigkeitsansammlungen in den C-förmigen Schienen bilden können.

Die Wende- und Verschiebemechanik weist erfindungsgemäß zumindest eine Vertikalführung und einen entlang der Vertikalführung drehbar und verschiebbar geführten Schwenkkörper auf. Der Schwenkkörper ist mit dem Halter fest verbunden und weist Arme mit Steuerflächen auf, die bei einer translatorischen Bewegung des Schwenkkörpers entlang der Vertikalführung mit ortsfest an der Vertikalführung angeordneten Anschlagflächen in Kontakt treten und bei fortgesetzter translatorischer Bewegung durch das Zusammenwirken mit den Anschlagflächen eine Schwenkbewegung des Schwenkkörpers um 180° bewirken.

Gemäß einer bevorzugten Ausführungsform der Erfindung weist der Schwenkkörper an beiden Seiten der Vertikalführung jeweils einen vorstehenden Arm auf, der an seiner von dem Halter abgewandten Unterseite mit einer konkav gekrümmten Steuerfläche ausgebildet ist. Bei einer translatorischen Bewegung des Schwenkkörpers entlang der Vertikalführung umgreifen die Steuerflächen nacheinander zwei untereinander angeordnete gerundete Anschlagflächen und bewirken dabei jeweils eine Viertelkreisdrehung des Schwenkkörpers. Zur Vervollständigung des Bewegungsablaufes weist der Schwenkkörper einen zwischen den Armen angeordneten Schwenkkörperabschnitt auf, der bei einer Bewegung der Steuerflächen um die Anschlagflächen in einen Freiraum zwischen den Anschlagflächen eintaucht. Die beschriebene Wende- und Verschiebemechanik ist robust, erfordert einen geringen Platzbedarf und erfüllt ihre Funktion auch problemlos in der Prozessflüssigkeit. Die für die Wende- und Verschiebemechanik erforderlichen Elemente können aus rostfreien Stählen, Titanblech oder anderen, auf die jeweilige Prozessflüssigkeit abgestimmten Materialien, gefertigt werden.

Gemäß einer bevorzugten Ausführungsform der Erfindung ist der Halter auf einem Träger angeordnet, an dessen Unterseite zwei Schwenkkörper befestigt sind, wobei die Schwenkkörper in einer Achse angeordnet sind und an jeweils einer Vertikalführung drehbar und verschiebbar geführt sind. Die beschriebene Anordnung ist insbesondere auch für großformatige und schwere Werkstückträger geeignet.

Die Hubvorrichtung weist zweckmäßig einen Kraftantrieb sowie eine an den Kraftantrieb angeschlossene Traverse auf, wobei die Traverse an Führungsschienen vertikal verfahrbar ist und an die Wende- und Verschiebemechanik angeschlossen ist. Die Führungsschienen zur Führung der Traverse sind außerhalb des Behälters angeordnet und der Prozessflüssigkeit nicht ausgesetzt. Als Kraftantrieb ist insbesondere eine pneumatische oder hydraulische Zylinder/Kolbenanordnung, ein elektromechanischer Stellantrieb oder ein elektrischer Linearantrieb geeignet.

Im Folgenden wird die Erfindung anhand einer lediglich ein Ausführungsbeispiel darstellenden Zeichnung erläutert. Es zeigen schematisch
- Fig. 1: die Seitenansicht eines Tauchbades,
- Fig. 2: eine Draufsicht auf das in Fig. 1 dargestellte Tauchbad,
- Fig. 3: eine vereinfachte schematische Darstellung einer Wende- und Verschiebemechanik als Teil des in Fig. 1 dargestellten Tauchbades.

Zum grundsätzlichen Aufbau des in den Figuren dargestellten Tauchbades gehören ein Behälter 1 für eine Prozessflüssigkeit 2, ein Halter 3 zur Aufnahme eines mit Werkstücken 4 bestückten Werkstückträgers 5 sowie eine Hubvorrichtung 6 zum Absenken des Halters 3 aus einer ersten Position I oberhalb des Flüssigkeitsspiegels 7 der Prozessflüssigkeit 2 in eine zweite Position I I innerhalb der Prozessflüssigkeit 2. Mittels der Hubvorrichtung 6 kann der Werkstückträger 5 auch wieder aus der Prozessflüssigkeit 2 herausgehoben werden.

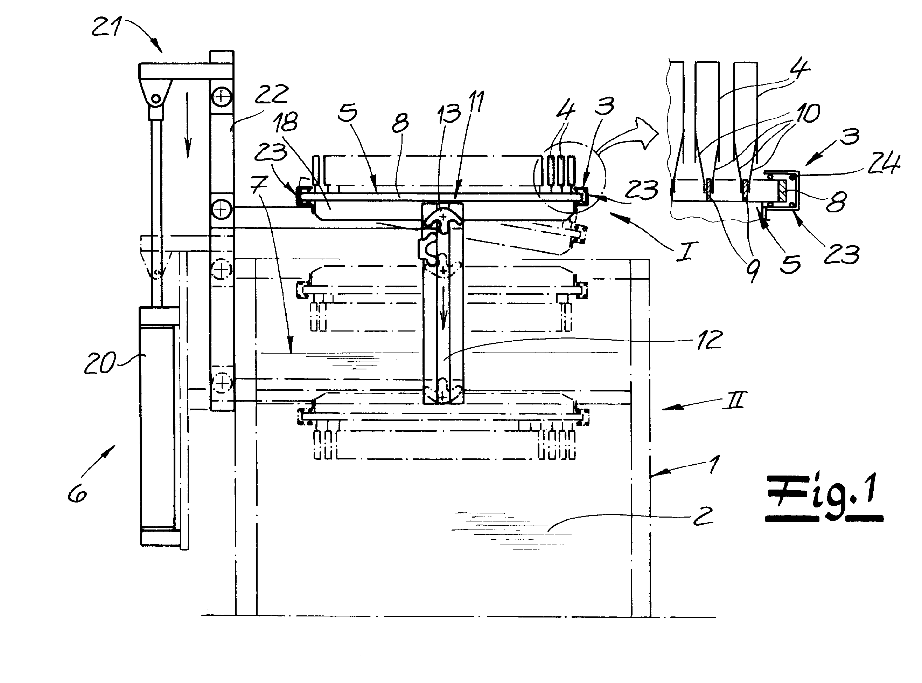

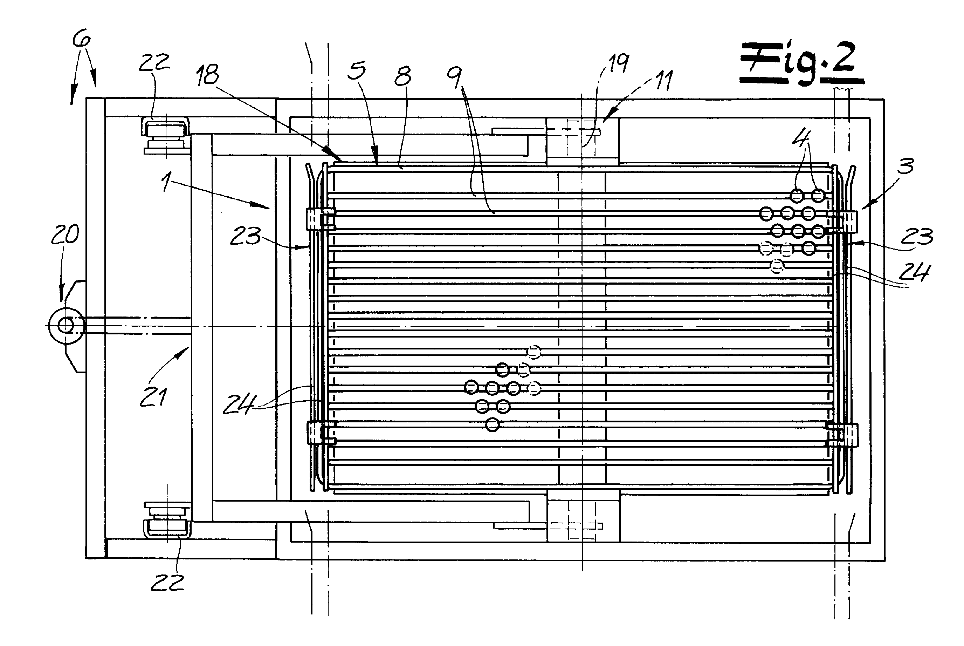

Der Darstellung in den Fig. 1 und 2 ist zu entnehmen, dass der Werkstückträger 5 einen ebenen Grundrahmen 8 und an dem Grundrahmen 8 befestigte Leisten 9 mit einer Mehrzahl von paarweise angeordneten elastisch verformbaren Fingern 10 zur Fixierung der Werkstücke 4 aufweist. Bei den Werkstücken 4 handelt es sich um kleinteilige Hohlkörper, z. B. Hülsen, Kappen oder dergleichen, die durch eine Behandlung im Tauchbad mit einer hochwertigen dekorativen Oberfläche versehen werden sollen. Der Darstellung in Fig. 1 entnimmt man, dass der Werkstückträger 5 in der ersten Position I horizontal ausgerichtet ist, wobei die vorstehenden Finger 10 des Werkstückträgers 5 nach oben gerichtet sind, so dass die Hohlkörper 4 über Kopf an den Fingern fixiert sind und etwaige Flüssigkeit aus dem Innenraum der Hohlkörper 4 ungehindert abtropfen kann.

Der Halter 3 ist an eine Wende- und Verschiebemechanik 11 angeschlossen, welche den Halter 3 bei einer durch einen Stellhub der Hubvorrichtung 6 bewirkten Bewegung, die sich von der ersten Position I bis zur zweiten Position I I erstreckt, oberhalb des Flüssigkeitsspiegels 7 um 180° dreht und danach mit einer translatorischen Bewegung in die Prozessflüssigkeit 2 absenkt. Die Drehbewegung ist von einer translatorischen Bewegung der Hubvorrichtung 6 abgeleitet und ist abgeschlossen, bevor die Drehachse den Flüssigkeitsspiegel 7 der Prozessflüssigkeit 2 erreicht. Die beschriebene Bewegungskinematik hat den Vorteil, dass alle an dem Werkstückträger 5 fixierten Hohlkörper 4 durch eine translatorische Absenkbewegung gleichzeitig die Prozessflüssigkeit erreichen. Beim Eintauchen des Werkstückträgers 5 in die Prozessflüssigkeit 2 sind die vorstehenden Finger 10 des Werkstückträgers 5 vertikal nach unten gerichtet, so dass die an den Fingern 10 klemmend fixierten Hohlkörper 4 an ihrem oberen Ende offen sind und die Prozessflüssigkeit auch in den Innenraum der Hohlkörper 4 ohne Beeinträchtigung durch Gasblasen strömen kann. Nach der Behandlung in der Prozessflüssigkeit wird der Halter durch eine Rückstellbewegung der Hubvorrichtung 6 mit einer translatorischen Bewegung angehoben, bis der Werkstückträger 5 die Prozessflüssigkeit 2 verlassen hat. Oberhalb des Flüssigkeitsspiegels setzt eine Drehbewegung ein, wobei der Werkstückträger 5 gewendet wird, so dass die Hohlkörper 4 über Kopf an den Fingern 10 fixiert sind und Flüssigkeit aus dem Innenraum der Werkstücke 4 ungehindert abtropfen kann.

Die Wende- und Verschiebemechanik 11 umfasst eine Vertikalführung 12 und einen entlang der Vertikalführung 12 drehbar und verschiebbar geführten Schwenkkörper 13. Der Schwenkkörper 13 ist mit dem Halter 3 für den Werkstückträger 5 fest verbunden und weist Arme 14 mit Steuerflächen 15 auf, die bei einer translatorischen Bewegung des Schwenkkörpers 13 entlang der Vertikalführung 12 mit ortsfest an der Vertikalführung angeordneten Anschlagflächen 16 in Kontakt treten und bei fortgesetzter translatorischer Bewegung durch das Zusammenwirken mit den Anschlagflächen 16 eine Schwenkbewegung des Schwenkkörpers 13 um 180° bewirken. Durch das Zusammenwirken der Hubvorrichtung 6 und der Wende- und Verschiebemechanik 11 wird der an dem Halter 3 festgelegte Werkstückträger 5 mit einer Rotationsbewegung gewendet und nach dem Wenden aus einer Position I oberhalb des Behandlungsbades mittels einer fortgesetzten Vertikalbewegung in die Prozessflüssigkeit 2 abgesenkt.

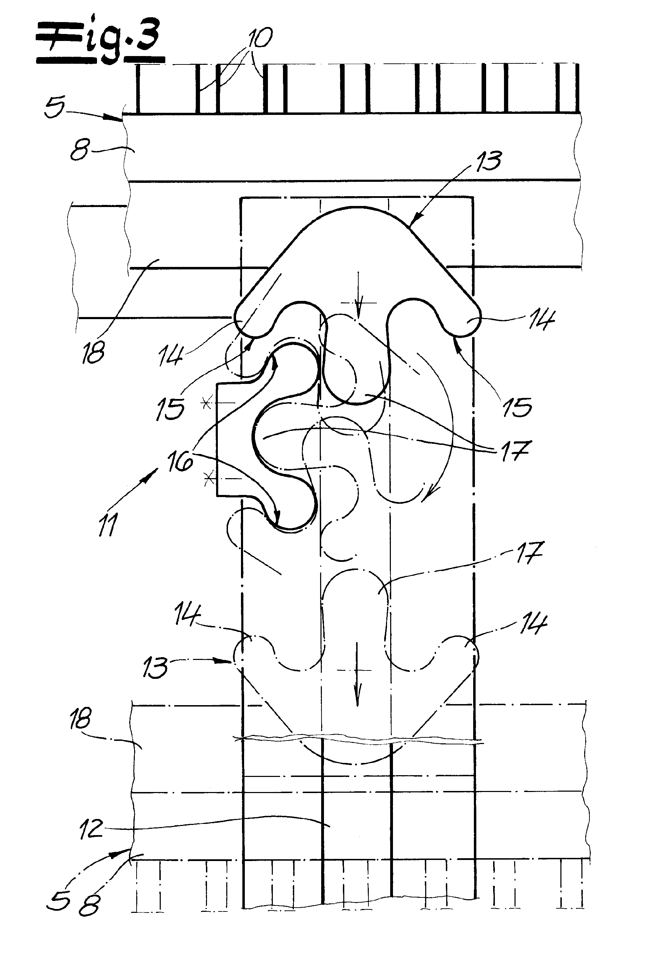

Der schematisch vereinfachten Darstellung in Fig. 3 ist zu entnehmen, dass der Schwenkkörper 13 an beiden Seiten der Vertikalführung jeweils einen vorstehenden Arm 14 aufweist, der an seiner von dem Halter 3 abgewandten Unterseite mit einer konkav gekrümmten Steuerfläche 15 ausgebildet ist. Die Steuerflächen 15 umgreifen bei einer translatorischen Bewegung des Schwenkkörpers 13 entlang der Vertikalführung 12 nacheinander zwei untereinander angeordnete gerundete Anschlagflächen 16 und bewirken dabei jeweils eine Viertelkreisdrehung des Schwenkkörpers 13. Zur Vervollständigung der Bewegung und Kopplung der vorstehend beschriebenen Viertelkreisdrehungen weist der Schwenkkörper 13 einen zwischen den Armen 14 angeordneten Schwenkkörperabschnitt 17 auf, der bei einer Bewegung der Steuerflächen 15 um die Anschlagflächen 16 in einen Freiraum zwischen den Anschlagflächen 16 eintaucht. Die Anschlagflächen 16 sind auch durch zueinander beabstandete Bolzen realisierbar.

Aus Fig. 2 geht hervor, dass der Halter 3 auf einem Träger 18 angeordnet ist, an dessen Unterseite zwei Schwenkkörper 13 befestigt sind. Die Schwenkkörper 13 sind in einer Achse 19 angeordnet und an jeweils einer Vertikalführung 12 drehbar und verschiebbar geführt.

Ferner ergibt sich aus einer zusammenschauenden Betrachtung der Fig. 1 und 2, dass die Hubvorrichtung 6 einen Kraftantrieb 20 und eine an den Kraftantrieb 20 angeschlossene Traverse 21 aufweist. Die Traverse 21 ist an Führungsschienen 22, die außerhalb des Behälters 1 angeordnet sind, vertikal verfahrbar und an die Wende- und Verschiebemechanik 11 angeschlossen. Der Kraftantrieb 20 weist im Ausführungsbeispiel eine pneumatische oder hydraulische Zylinder/Kolbenanordnung auf. Alternativ kann auch ein elektromechanischer Stellantrieb oder ein elektrischer Linearantrieb als Kraftantrieb 20 eingesetzt werden.

Der Halter 3 weist an zwei gegenüberliegenden Seiten jeweils eine C-förmige Schiene 23 zur Auflage des Werkstückträgers 5 auf. Die C-förmige Schiene 23 ist vorzugsweise aus Drahtelementen 24 gefertigt. Beidseits des Tauchbades sind entsprechende Schienensysteme für die Zuführung eines Werkstückträgers zum Tauchbades und zum Abtransport des Werkstückträgers im Anschluss an den Tauchvorgang vorgesehen.

## Patentansprüche

1. Tauchbad mit einem Behälter (1) für eine Prozessflüssigkeit (2), einem Halter (3) zur Aufnahme eines mit Werkstücken (4) bestückten Werkstückträgers (5) und einer Hubvorrichtung (6) zum Absenken des Halters (3) aus einer ersten Position (I) oberhalb des Flüssigkeitsspiegels (7) der Prozessflüssigkeit (2) in eine zweite Position (II) innerhalb der Prozessflüssigkeit (2), wobei der Halter (3) an eine Wende- und Verschiebemechanik (11) angeschlossen ist, **dadurch gekennzeichnet, dass** die Wende- und Verschiebemechanik (11) den Halter (3) bei einer durch einen Stellhub der Hubvorrichtung (6) bewirkten Bewegung, die sich von der ersten Position (I) bis zur zweiten Position (II) erstreckt, oberhalb des Flüssigkeitsspiegels (7) dreht und danach mit einer translatorischen Bewegung in die Prozessflüssigkeit absenkt und dass die Wende- und Verschiebemechanik (11) zumindest eine Vertikalführung (12) und einen entlang der Vertikalführung (12) drehbar und verschiebbar geführten Schwenkkörper (13) aufweist, wobei der Schwenkkörper (13) mit dem Halter (3) fest verbunden ist und Arme (14) mit Steuerflächen (15) aufweist, die bei einer translatorischen Bewegung des Schwenkkörpers (13) entlang der Vertikalführung (12) mit ortsfest an der Vertikalführung (12) angeordneten Anschlagflächen (16) in Kontakt treten und bei fortgesetzter translatorischer Bewegung durch das Zusammenwirken mit den Anschlagflächen (16) eine Schwenkbewegung des Schwenkkörpers (13) um 180° bewirken.

2. Tauchbad nach Anspruch 1, **dadurch gekennzeichnet, dass** der Halter (3) eine Auflagefläche für mindestens einen Werkstückträger (5) aufweist, die den Werkstückträger (5) in der ersten Position (I) horizontal ausrichtet.

3. Tauchbad nach Anspruch 1 oder 2, **dadurch gekennzeichnet, dass** der Halter (3) an zwei gegenüberliegenden Seiten jeweils eine C-förmige Schiene (23) zur Auflage des Werkstückträgers (5) aufweist.

4. Tauchbad nach Anspruch 3, **dadurch gekennzeichnet, dass** die C-förmigen Schienen (23) aus Drahtelementen (24) gefertigt sind.

5. Tauchbad nach einem der Ansprüche 1 bis 4, **dadurch gekennzeichnet, dass** der Schwenkkörper (13) an beiden Seiten der Vertikalführung (12) jeweils einen vorstehenden Arm (14) aufweist, der an seiner von dem Halter (3) abgewandten Unterseite mit einer konkav gekrümmten Steuerfläche (15) ausgebildet ist, dass die Steuerflächen (15) bei einer translatorischen Bewegung des Schwenkkörpers (13) entlang der Vertikalführung (12) nacheinander zwei untereinander angeordnete gerundete Anschlagflächen (16) umgreifen und dabei jeweils eine Viertelkreisdrehung des Schwenkkörpers (13) bewirken und dass der Schwenkkörper (13) einen zwischen den Armen (14) angeordneten Schwenkkörperabschnitt (17) aufweist, der bei einer Bewegung der Steuerflächen (15) um die Anschlagflächen (16) in einen Freiraum zwischen den Anschlagflächen (16) eintaucht.

6. Tauchbad nach Anspruch 5, **dadurch gekennzeichnet, dass** der Halter (3) auf einem Träger (18) angeordnet ist, an dessen Unterseite zwei Schwenkkörper (13) befestigt sind, wobei die Schwenkkörper (13) in einer Achse (19) angeordnet sind und an jeweils einer Vertikalführung (12) drehbar und verschiebbar geführt sind.

7. Tauchbad nach einem der Ansprüche 1 bis 6 , **dadurch gekennzeichnet, dass** die Hubvorrichtung (6) einen Kraftantrieb (20) sowie eine an den Kraftantrieb (20) angeschlossene Traverse (21) aufweist, wobei die Traverse (21) an Führungsschienen (22), die außerhalb des Behälters angeordnet sind, vertikal verfahrbar ist und an die Wende- und Verstellmechanik (11) angeschlossen ist.

8. Tauchbad nach Anspruch 7 , **dadurch gekennzeichnet, dass** der Kraftantrieb (20) alternativ eine pneumatische oder hydraulische Zylinder/Kolbenanordnung, einen elektromechanischen Stellantrieb oder einen elektrischen Linearantrieb aufweist.

## Claims

1. An immersion bath having a container (1) for a process liquid (2), a holder (3) for receiving a workpiece carrier (5) fitted with workpieces (4) and a lift device (6) for lowering the holder (3) out of a first position (I) above the liquid level (7) of the process liquid (2) into a second position (II) inside the process liquid (2), the holder (3) being connected to a turning and shifting mechanism (11), **characterised in that** the turning and shifting mechanism (11) turns the holder (3) above the liquid level (7) with a movement that is effected by an actuating lift of the lift device (6) and extends from the first position (I) to the second position (II), and then lowers it into the process liquid with a translatory movement, and that the turning and shifting mechanism (11) has at least one vertical guide (12) and a pivoting body (13) that is guided rotatably and displaceably along the vertical guide (12), wherein the pivoting body (13) is connected fixedly to the holder (3) and has arms (14) with control faces (15), which come into contact with stop faces (16) arranged in a stationary manner on the vertical guide (12) with a translatory movement of the pivoting body (13) along the vertical guide (12) and effect a pivoting movement of the pivoting body (13) by 180° owing to interaction with the stop faces (16) as the translatory movement continues.

2. The immersion bath according to claim 1, **characterised in that** the holder (3) has a bearing face for at least one workpiece carrier (5), said face orienting the workpiece carrier (5) horizontally in the first position (I).

3. The immersion bath according to claim 1 or 2, **characterised in that** the holder (3) has a C-shaped rail (23) for supporting the workpiece carrier (5) on each of two opposite sides.

4. The immersion bath according to claim 3, **characterised in that** the C-shaped rails (23) are manufactured from wire elements (24).

5. The immersion bath according to any one of claims 1 to 4, **characterised in that** the pivoting body (13) has a projecting arm (14) on each of the two sides of the vertical guide (12), said arm being formed with a concavely curved control face (15) on its underside that faces away from the holder (3), that the control faces (15) successively engage around two rounded stop faces (16) that are arranged one below the other with a translatory movement of the pivoting body (13) along the vertical guide (12) and in the process each effect a quarter rotation of the pivoting body (13), and that the pivoting body (13) has a pivoting body section (17), which is arranged between the arms (14) and passes into a free space between the stop faces (16) with a movement of the control faces (15) around the stop faces (16).

6. The immersion bath according to claim 5, **characterised in that** the holder (3) is arranged on a carrier (18), on the underside of which two pivoting bodies (13) are fastened, wherein the pivoting bodies (13) are arranged in one axis (19) and are each guided rotatably and displaceably on one vertical guide (12).

7. The immersion bath according to any one of claims 1 to 6, **characterised in that** the lift device (6) has a power drive (20) and a crossbeam (21) connected to the power drive (20), wherein the crossbeam (21) can be moved vertically on guide rails (22), which are arranged outside the container, and is connected to the turning and shifting mechanism (11).

8. The immersion bath according to claim 7, **characterised in that** the power drive (20) alternatively has a pneumatic or hydraulic cylinder-piston arrangement, an electromechanical actuator or an electrical linear drive.

## Revendications

1. Bain de trempage avec un conteneur (1) pour un liquide de traitement (2), un support (3) pour loger un porte-pièces (5) muni de pièces (4) et un dispositif de levage (6) pour abaisser le support (3) d'une première position (I) au-dessus du niveau de liquide (7) du liquide de traitement (2) dans une deuxième position (II) à l'intérieur du liquide de traitement (2), dans lequel le support (3) est raccordé à un mécanisme de pivotement et de déplacement (11), **caractérisé en ce que** le mécanisme de pivotement et de déplacement (11)tourne le support (3)au-dessus du niveau de liquide (7) lors d'un mouvement causé par une course de réglage du dispositif de levage (6) s'étendant de la première position (I) jusqu'à la deuxième position (II) et descend ensuite avec un mouvement translatoire dans le liquide de traitement et **en ce que** le mécanisme de pivotement et de déplacement (11) comporte au moins un guidage vertical (12) et un corps pivotant (13) guidé de manière à pouvoir tourner et se déplacer le long du guidage vertical (12), le corps pivotant (13) étant fermement relié au support (3) et comporte des bras (14) avec des surfaces pilotes (15) qui entrent en contact avec des surfaces de butée (16) disposées fixement sur le guidage vertical (12) lors d'un mouvement translatoire du corps pivotant (13) le long du guidage vertical (12) et causent lors du mouvement translatoire continu, un mouvement de pivotement du corps pivotant (13) de 180° par la coopération avec les surfaces de butée (16).

2. Bain de trempage selon la revendication 1, **caractérisé en ce que** le support (3) comporte une surface d'appui pour au moins un porte-pièces (5) qui oriente horizontalement le porte-pièces (5) dans la première position (I).

3. Bain de trempage selon la revendication 1 ou 2, **caractérisé en ce que** le support (3) comporte respectivement sur les deux côtés opposés un rail (23) en forme de C pour supporter le porte-pièces (5).

4. Bain de trempage selon la revendication 3, **caractérisé en ce que** les rails (23) en forme de C sont fabriqués à partir d'éléments de fil métallique (24).

5. Bain de trempage selon l'une quelconque des revendications 1 à 4, **caractérisé en ce que** le corps pivotant (13) comporte sur les deux côtés du guidage vertical (12) respectivement un bras (14) en saillie, qui est constitué sur son côté inférieur opposé au support (3) d'une surface pilote (15)courbée de façon concave, **en ce que** les surfaces pilotes (15) lors d'un mouvement translatoire du corps pivotant (13) le long du guidage vertical (12) enveloppent l'une après l'autre deux surfaces de butée (16) arrondies disposées l'une au-dessous de l'autre et causent à cet effet respectivement une rotation d'un quart de cercle du corps pivotant (13) et **en ce que** le corps pivotant (13) comporte une section de corps pivotant (17) disposée entre les bras (14) qui plonge lors d'un mouvement des surfaces pilotes (15) autour des surfaces de butée (16) dans un espace libre entre les surfaces de butée (16).

6. Bain de trempage selon la revendication 5, **caractérisé en ce que** le support (3) est disposé sur un élément porteur (18) sur le côté inférieur duquel sont fixés deux corps pivotants (13), les corps pivotants (13) étant disposés dans un axe (19) et étant guidés de manière à pouvoir tourner et se déplacer respectivement sur un guidage vertical (12).

7. Bain de trempage selon l'une quelconque des revendications 1 à 6, **caractérisé en ce que** le dispositif de levage (6) comporte un mécanisme d'entraînement (20) ainsi qu'une traverse (21) raccordée au mécanisme d'entraînement (20), la traverse (21) étant verticalement déplaçable sur les rails de guidage (22) disposés en dehors du conteneur, et est raccordée au mécanisme de pivotement et de déplacement (11).

8. Bain de trempage selon la revendication 7, **caractérisé en ce que** le mécanisme d'entraînement (20) comporte alternativement un système vérin/piston pneumatique ou hydraulique, un organe de commande électromécanique ou un entraînement linéaire électrique.
